# EUROPÄISCHE PATENTSCHRIFT

(11) **EP 3 218 972 B1**
(45) Veröffentlichungstag und Bekanntmachung des Hinweises auf die Patenterteilung: **31.03.2021**
(21) Anmeldenummer: 15790936.7
(22) Anmeldetag: 05.11.2015
(51) Int. Cl.: H02G 3/04

(54) **WELLROHRANORDNUNG ZUR AUFNAHME VON LEITUNGEN UND VERFAHREN ZUR HERSTELLUNG EINER SOLCHEN WELLROHRANORDNUNG**
CORRUGATED TUBE ASSEMBLY FOR RECEIVING LINES, AND METHOD FOR PRODUCING SUCH A CORRUGATED TUBE ASSEMBLY
DISPOSITIF EN FORME DE TUBE ONDULÉ POUR LA RÉCEPTION DE CONDUITES ET PROCÉDÉ DE FABRICATION D'UN TEL DISPOSITIF EN FORME DE TUBE ONDULÉ

(30) Priorität: 11.11.2014 DE 102014116447
(43) Veröffentlichungstag der Anmeldung: 20.09.2017
(73) Patentinhaber: SCHLEMMER GMBH, 85586 Poing (DE)
(72) Erfinder: CHU, Van-Ngoc, 85586 Poing (DE)
(74) Vertreter: Horn Kleimann Waitzhofer Patentanwälte PartG mbB
(86) Internationale Anmeldenummer: PCT/EP2015/075851
(87) Internationale Veröffentlichungsnummer: WO 2016/075030

(56) Entgegenhaltungen:
- EP-A1- 0 859 440
- DE-A1-102012 204 418
- DE-U1- 29 906 905
- JP-A- 2000 115 942

## Beschreibung

Die Erfindung bezieht sich auf eine Wellrohranordnung zur Aufnahme von Leitungen, Kabelbäumen oder dgl., umfassend ein inneres und ein äußeres, jeweils flexibles Wellrohr aus Kunststoff mit umlaufenden Wellungen und mit jeweils einem Längsschlitz, wobei das äußere Wellrohr auf das innere Wellrohr unter gegenseitigem radialen Eingriff der Wellungen beider Wellrohre aufsteckbar ist, im aufgesteckten Zustand in den Längsschlitz des äußeren Wellrohres eine am inneren Wellrohr ausgebildete Längsleiste radial hineinragt und diesen überdeckt, die mit Wellungen gleicher Form und Teilung wie am äußeren Wellrohr versehen ist und deren Außendurchmesser dem der Wellungen am äußeren Wellrohr entspricht.

Eine solche Wellrohranordnung ist aus der EP 0 268 869 A bekannt. Diese bekannte Anordnung dient bevorzugt zur Aufnahme von Kabelbäumen bei Kraftfahrzeugen und wird auf diesem Anwendungsgebiet in weitem Umfang eingesetzt. Dabei ergibt sich durch die Wellungen am äußeren und am inneren Rohr eine besonders gute Flexibilität einer solchen Wellrohranordnung.

Es hat sich nun aber gezeigt, daß bei speziellen Lastkraftwagen, etwa bei Baustellenfahrzeugen o. ä., die in einer stark staub- oder schmutzhaltigen Umgebung eingesetzt werden, Staub- und Schmutzpartikel während des Fahrzeugbetriebes von der Außenseite der Wellrohranordnung in deren Innenraum eindringen können, und zwar über die an beiden Seitenkanten des Längsschlitzes des äußeren Wellrohres beim Ausschneiden des Längsschlitzes entstandenen offenen radialen Endquerschnitte der Wellungen, wobei die Staub- oder Schmutzpartikel in dem radialen Zwischenraum zwischen den miteinander in Eingriff stehenden Wellungen des inneren und des äußeren Wellrohres in Umfangsrichtung bis zu der Stelle gelangen können, an der im inneren Wellrohr der Längsschlitz angebracht ist, durch den sie dann in das Innere des inneren Wellrohres, wo die Leitungen oder der Kabelbaum o. ä. untergebracht sind, eintreten können, was sehr unerwünscht ist. Dieser Nachteil tritt zudem bei einem gebogenen Zustand der bekannten Wellrohranordnung ganz besonders deutlich auf.

Die JP 2000 115942 A zeigt eine Wellrohranordnung gemäß dem Oberbegriff des Patentanspruchs 1.

Die DE 299 06 905 U1 zeigt ein Schutzrohr aus elastisch flexiblem Material für Kabel, wobei das Schutzrohr in zwei getrennte Rohrschalen geteilt ist, die in ihren Rändern zusammenwirkende Rastvorsprünge bzw. Rastvertiefungen aufweisen, mit denen die beiden Rohrschalen durch Einrasten zu einem geschlossenen Rohr verbindbar sind.

Die DE 10 2012 204 418 A1 zeigt eine Rohranordnung mit einem Innenrohr, dessen Rohrwandung einen über seine Länge durchgehenden Schlitz aufweist, und einem Außenrohr, dessen Rohrwandung ebenfalls einen über seine Länge durchgehenden Schlitz aufweist, wobei das Außenrohr derart auf das Innenrohr aufsetzbar ist, dass seine Rohrwandung den Schlitz des Innenrohrs überdeckt, wobei im zusammengefügten Zustand von Außenrohr und Innenrohr zwischen Innenrohr und Außenrohr Dichtungsmaterial vorgesehen ist.

Die EP 0 859 440 A1 zeigt ein Kunststoffwellrohr mit einem Längsschlitz bzw. einer in Längsrichtung des Rohres erstreckten, im Wesentlichen durchgehenden Öffnung, wobei die einander gegenüberliegenden Randbereiche wenigstens abschnittsweise so ausgebildet sind, dass sie miteinander verbindbar sind.

Ausgehend hiervon stellt die Erfindung darauf ab, eine bekannte Wellrohranordnung der eingangs genannten Art so weiterzuentwickeln, daß sie auch in sehr staub- oder schmutzhaltiger Umgebung einsetzbar sind. Es soll zudem auch ein Verfahren zur Herstellung einer solchen erfindungsgemäßen Wellrohranordnung angegeben werden.

Erfindungsgemäß wird dies bei einer Wellrohranordnung der eingangs genannten Art dadurch erreicht, daß die radialen Endquerschnitte aller Wellungen an beiden Seitenkanten sowohl des Längsschlitzes des äußeren Wellrohres wie auch der Längsleiste am inneren Wellrohr und an den beidseits dieser Längsleiste verlaufenden Längsseiten des restlichen Querschnitts des inneren Wellrohres verschlossen sind, wobei die Längsleiste des inneren Wellrohres an beiden Längsseiten jeweils über eine im radialen Querschnitt V-förmige, radial bis zum Innendurchmesser der Wellungen des inneren Wellrohres verlaufende Vertiefung mit dem restlichen Querschnitt des inneren Wellrohres verbunden ist, und daß im zusammengesteckten Zustand beider Wellrohre jede Seitenkante des Längsschlitzes des äußeren Wellrohres in die V-förmige Vertiefung an der zugewandten Längsseite der Längsleiste des inneren Wellrohres hineinragt.

Bei der erfindungsgemäßen Wellrohranordnung ist dafür Sorge getragen, daß in den unvermeidlichen Längsschlitzen, die am Umfang des äußeren Wellrohres sich zwischen den Seitenkanten dessen Längsschlitzes und den Seitenkanten der in diesen hineinragenden Längsleiste des inneren Wellrohres auftreten, an den dort jeweils vorliegenden Enden aller Wellungen keinerlei offene Endquerschnitte mehr vorliegen, die ein Eindringen von Staub oder Schmutz in das Innere der einzelnen Wellungen mehr zulassen, vielmehr alle Endquerschnitte verschlossen sind.

Durch die erfindungsgemäßen Maßnahmen wird somit ein Eindringen von Staub oder Schmutz in das Innere der Wellrohranordnung sowohl auf dem Weg über die Wellungen der Längsleiste des inneren Wellrohrs, wie auch über die Wellungen des äußeren Wellrohres und die mit diesen in Eingriff stehenden Wellungen des restlichen inneren Wellrohres erheblich behindert.

Da bei der erfindungsgemäßen Wellrohranordnung die radial nach außen versetzte, im zusammengebauten Zustand in den Längsschlitz des äußeren Wellrohres hineinragende Längsleiste des inneren Wellrohres an ihren beiden Längsseiten mit dem restlichen Abschnitt des inneren Wellrohres jeweils über eine V-förmige Nut verbunden ist, in deren jede eine der Seitenkanten des Längsschlitzes des äußeren Wellrohres hineinragt, wird im Bereich zwischen der Längsleiste und den Seitenkanten des restlichen Querschnitts des inneren Wellrohres über die ganze Länge der Anordnung hinweg ein radial geschlossener Übergangsbereich geschaffen, der die geschlossenen Endquerschnitte der Wellungen jeweils an einer Längsseite des restlichen Abschnitts des inneren Wellrohres und der an der zugeordneten Seitenkante der Längsleiste vorliegenden, verschlossenen Endquerschnitte der dortigen Wellungen im Rahmen einer durchgängigen V-förmigen Vertiefung oder Nut miteinander verbindet. Die jeweils in eine solche V-förmige Vertiefung hineinragende Längskante des Längsschlitzes des äußeren Wellrohres kann dort mit ihrer radial nach innen gerichteten Endfläche, in der auch alle Verschluß-Abdeckungen der dortigen Endquerschnitte der Wellungen liegen, gut aufgenommen werden.

Die erfindungsgemäße Wellrohranordnung ist vorzüglich zum Einsatz bei Fahrzeugen unter staubigen oder schmutzigen Umgebungsbedingungen geeignet und stellt sicher, daß Schmutz- und Staubpartikel in das Innere der Wellrohranordnung kaum mehr entlang der Längserstreckung dieser Anordnung eindringen können.

Das Verschließen der Endquerschnitte der einzelnen Wellungen entlang der Längsseiten des Längsschlitzes am äußeren Wellrohr und der Längsleiste am inneren Wellrohr sowie an den beidseits der Längsleiste am restlichen Querschnitt des inneren Wellrohres vorliegenden Längsseiten kann in jeder geeigneten Form ausgeführt werden. Besonders bevorzugt werden diese Endquerschnitte der Wellungen jedoch durch einstückig mit diesen ausgebildeten Abdeckungen verschlossen, die schon bei der Formgebung des betreffenden Wellrohres im Corrugator mit ausgebildet werden.

Vorteilhafterweise werden bei der erfindungsgemäßen Wellrohranordnung die Wellungen an den beiden Wellrohren entweder ringförmig umlaufend oder wendelförmig verlaufend ausgebildet.

Weiter bevorzugt erfolgt die Formgebung des inneren Wellrohres derart, daß im Querschnitt die der Längsleiste abgewandte Seitenwand jeder V-förmigen Vertiefung radial ausgerichtet ist, was es gestattet, bei der Herstellung des inneren Wellrohres im Corrugator die Ausformung der beiden V-förmigen Vertiefungen über nur eine der beiden Formbackenhälften der jeweiligen Form vorzunehmen, die anschließend radial abgezogen werden kann.

Ebenfalls vorteilhafterweise kann statt dessen aber auch im Querschnitt die mit der Längsleiste verbundene Seitenwand jeder V-förmigen Vertiefung radial ausgerichtet werden, wobei in diesem Fall bei der Formgebung im Corrugator durch jede der beiden Formbackenhälften der jeweiligen Form nur jeweils eine V-förmige Vertiefung ausbildbar ist.

Es ist ferner von Vorteil, wenn bei einer erfindungsgemäßen Wellrohranordnung die Wandstärken von innerem und äußerem Wellrohr gleich groß oder im Wesentlichen gleich groß sind.

Von Vorteil ist es ferner, wenn im unbelasteten Zustand beider Wellrohre der Längsschlitz des äußeren Wellrohres eine größere Breite als der Längsschlitz des inneren Wellrohres aufweist, wodurch verhindert wird, daß selbst bei einem sehr flüchtigen Zusammenbau beider Wellrohre versehentlich das Außenrohr in den Längsschlitz des Innenrohres gelangen könnte. Dabei wird besonders bevorzugt das innere Wellrohr nur entlang einer geradlinigen, radial ausgerichteten Schnittebene geschlitzt, so daß nach erfolgtem Schlitzen die beiden Seitenkanten des Schlitzes entweder unmittelbar nebeneinander liegen oder nur um einen sehr kleinen Abstand, etwa 1 mm, voneinander entfernt sind.

In einer besonders vorteilhaften Ausgestaltung der Erfindung liegen die verschlossenen Endquerschnitte der Wellungen des äußeren Wellrohres jeweils in den Seitenkanten dessen Längsschlitzes, und, gleichfalls vorzugsweise, werden die verschlossenen Endquerschnitte der Wellungen des inneren Wellrohres an jeder Längsseite dessen Längsleiste und die verschlossenen Endquerschnitte der Wellungen an jeder Längsleiste des restlichen Querschnitts des inneren Wellrohres jeweils in der Ebene einer der beiden Seitenwände der zugeordneten V-förmigen Vertiefung vorgesehen.

Ein besonders günstiges Verfahren zur Herstellung einer erfindungsgemäßen Anordnung, wie sie oben geschildert wird, umfaßt die folgenden Verfahrensschritte:
a) aus einem Extruder wird ein erstes Kunststoffrohr extrudiert und in einem nachgeschalteten Corrugator wird unter Ausbildung von umlaufenden Wellungen an seinem Umfang ein äußeres Wellrohr für die Wellrohranordnung ausgebildet, bei dem jedoch innerhalb eines Umfangssegmentes mit einer vorgegebenen Breite keine Wellungen vorgesehen werden und alle radialen Endquerschnitte der Wellungen an den Längsseiten beidseits des Umfangssegmentes verschlossen sind;
b) aus einem Extruder wird ein zweites Kunststoffrohr extrudiert und in einem nachgeschalteten Corrugator wird ein inneres Wellrohr für die Wellrohranordnung unter Ausbildung von umlaufenden Wellungen gleicher Teilung wie am äußeren Wellrohr am Umfang ausgebildet, wobei innerhalb eines Umfangssegmentes einer Breite, die der des Umfangssegmentes am äußeren Wellrohr entspricht, radial nach außen versetzt eine Längsleiste angebracht wird, die an jeder ihrer beiden Seitenkanten über eine V-förmige Vertiefung, die sich radial bis zum Innendurchmesser der Wellungen dieses innen Wellrohres erstreckt, mit dem restlichen Abschnitt dieses inneren Wellrohres verbunden ist, wobei die radialen Endquerschnitte der Wellungen an den beiden Längsseiten der Längsleiste und die Endquerschnitte der Wellungen beidseits der Längsleiste an den Längsseiten des restlichen Querschnitts dieses innen Wellrohres verschlossen sind;
c) am äußeren Wellrohr wird das Umfangssegment, an dem keine Wellungen angebracht sind, herausgeschnitten und dadurch ein Längsschlitz erzeugt;
d) das innere Wellrohr wird ebenfalls in Längsrichtung geschlitzt;
e) schließlich wird das äußere Wellrohr unter elastischer Aufweitung seines Längsschlitzes auf das innere Wellrohr derart aufgesteckt, daß die Längsleiste des inneren Wellrohres in den Längsschlitz des äußeren Wellrohres radial hineinragt und jede Seitenkante dieses Längsschlitzes in die V-förmige Vertiefung an der zugewandten Längsseite des inneren Wellrohres eingreift.

Das erfindungsgemäße Verfahren gestattet eine relativ einfache und unkomplizierte Herstellung einer rasch zusammensetzbaren erfindungsgemäßen Wellrohranordnung.

Die Extrusion der beiden Kunststoffrohre, die zum äußeren und zum inneren Wellrohr geformt werden, könnte ohne weiteres auch in einem Extruder mit zwei separaten Spritzdüsen erfolgen, wobei dann in der jeweiligen Form eines nachgeschalteten Corrugators zwei entsprechende Formausbildungen vorgesehen sind. Vorteilhafterweise werden jedoch zur Extrusion der beiden Kunststoffrohre zwei Extruder mit jeweils jedem derselben einem nachgeschalteten Corrugator eingesetzt, wodurch die Extrusion der beiden Kunststoffrohre parallel zueinander aus jedem der Extruder durchgeführt wird.

Wie schon weiter oben ausgeführt, erfolgt bei dem erfindungsgemäßen Verfahren das Schlitzen des inneren Wellrohres in dessen Längsrichtung nur entlang einer geradlinigen Schnittebene, wodurch ein Längsschlitz mit einer sehr kleinen Breite entsteht, bei dem sogar die Längskanten dieses Längsschlitzes direkt nebeneinander liegen oder sogar einander berühren können.

Die Wellungen am äußeren Wellrohr und am inneren Wellrohr, die bei dem erfindungsgemäßen Verfahren ausgeformt werden, können bezüglich ihrer Wellenformen unterschiedlich sein, dürfen sich jedoch formmäßig nicht zu stark unterscheiden, damit bei einer Biegung der Wellrohranordnung nicht das Innenrohr mit seinen Wellungen außer Eingriff mit den Wellungen des Außenrohres tritt. In jedem Fall werden die Wellungen am äußeren und am inneren Wellrohr mit einer gleichen Teilung ausgeführt.

Beim Schlitzen des inneren Wellrohres in dessen Längsrichtung wird die Schlitzlage bevorzugt diametral gegenüber der Längsleiste vorgesehen.

Die Erfindung wird nachfolgend anhand der Figuren im Prinzip beispielshalber noch näher erläutert. Es zeigen:
- Fig. 1: eine Perspektivdarstellung einer erfindungsgemäßen Wellrohranordnung;
- Fig. 2: eine Vorderansicht der Wellrohranordnung aus Fig. 1;
- Fig. 3: eine Perspektivdarstellung des äußeren Wellrohres der Wellrohranordnung aus Fig. 1, jedoch noch vor dem Ausschneiden des Längsschlitzes;
- Fig. 4: eine Ansicht (von oben) auf das äußere Wellrohr aus Fig. 3;
- Fig. 5: eine Vorderansicht des Wellrohres aus Fig. 4;
- Fig. 6: eine Perspektivdarstellung des inneren Wellrohres der Wellrohranordnung aus Fig. 1;
- Fig. 7: eine Ansicht von oben auf das innere Wellrohr von Fig. 6;
- Fig. 8: eine Vorderansicht des inneren Wellrohres von Fig. 7;
- Fig. 9: eine Perspektivansicht des äußeren Wellrohres aus Fig. 3, jedoch nach Ausschneiden des Längsschlitzes;
- Fig. 10: das innere Wellrohr gemäß Fig. 6, jedoch nach Anbringen des Längsschlitzes an diesem;
- Fig. 11: eine Perspektivdarstellung einer anderen Ausführungsform des inneren Wellrohres als die in Fig. 6;
- Fig. 12: eine Perspektivdarstellung einer erfindungsgemäßen Wellrohranordnung entsprechend Fig. 1, jedoch mit dem inneren Wellrohr gemäß Fig. 11;
- Fig. 13: eine Vorderansicht der Wellrohranordnung aus Fig. 12;
- Fig. 14: eine schematische Darstellung der Schritte zur Herstellung einer erfindungsgemäßen Wellrohranordnung.

In der folgenden Figurenbeschreibung sind in den unterschiedlichen Figuren gleiche Teile mit gleichem Bezugszeichen versehen.

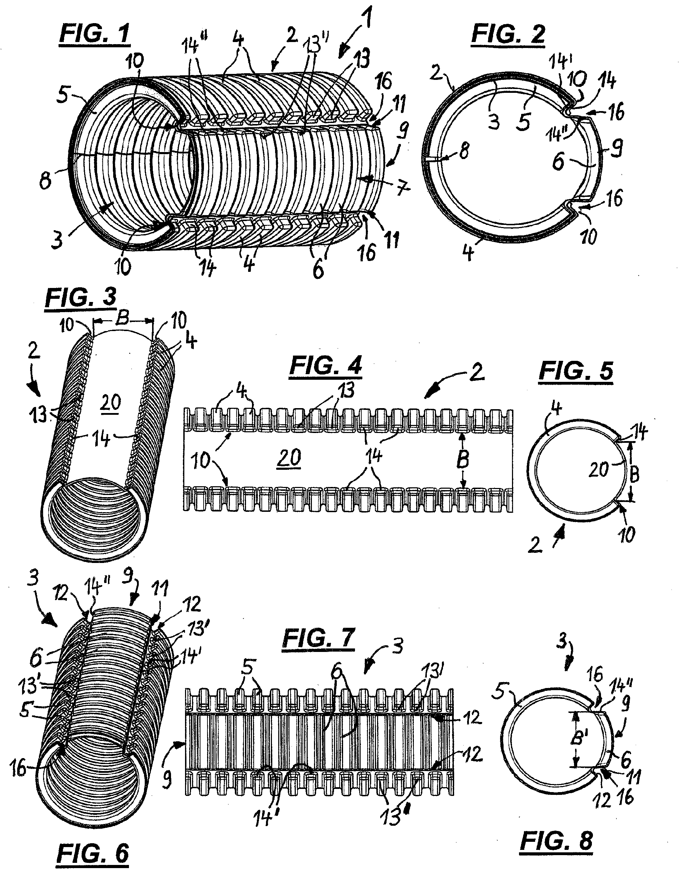

Fig. 1 zeigt eine perspektivische Darstellung einer erfindungsgemäßen Wellrohranordnung 1, die in Fig. 2 in einer Vorderansicht gezeigt ist.

Die Wellrohranordnung 1 besteht aus einem äußeren Wellrohr 2, in das ein inneres Wellrohr 3 eingesetzt ist, wobei die Wellungen 4 des äußeren Wellrohres 2 mit den Wellungen 5 des inneren Wellrohres 3 in Eingriff stehen, d. h. die Wellungen 5 des inneren Wellrohres 3, die eine gleiche Teilung wie die Wellungen 4 des äußeren Wellrohres 2 aufweisen, ragen radial in diese hinein.

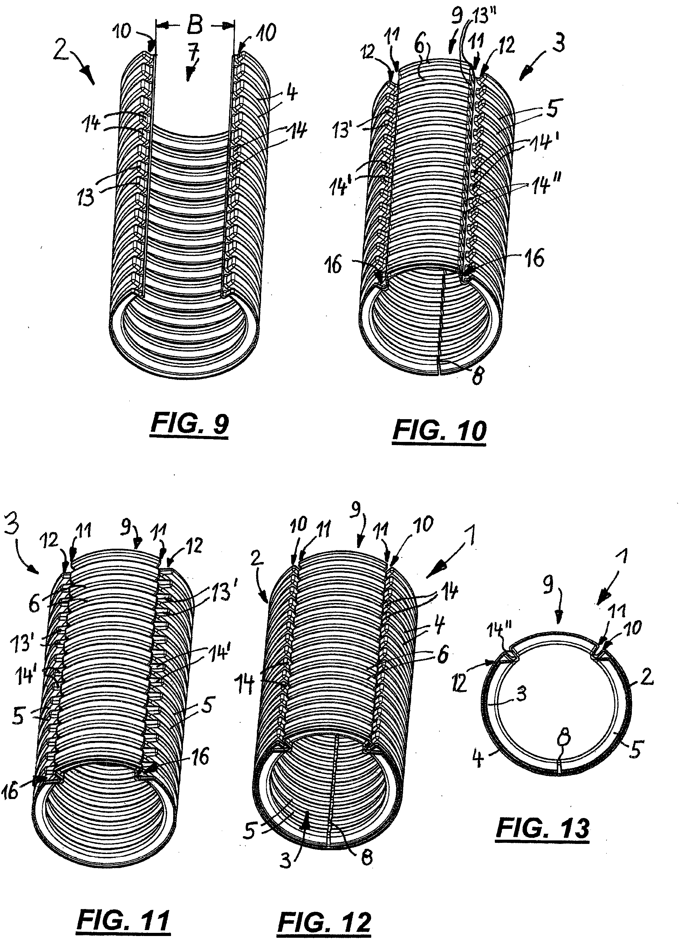

Das äußere Wellrohr 2 ist in Fig. 3 in perspektivischer Darstellung, in Fig. 4 in Draufsicht und in Fig. 5 in Vorderansicht dargestellt, wobei die Fig. 3 bis Fig. 5 das äußere Wellrohr 2 in einem Zustand zeigen, in dem dieses noch nicht mit einem Längsschlitz versehen ist. Das äußere Wellrohr 2 in seinem fertiggestellten Zustand, also nach Ausbildung eines Längsschlitzes 7, ist in perspektivischer Darstellung in Fig. 9 wiedergegeben.

Wie aus den Fig. 3 bis 5 ersichtlich ist, ist das äußere Wellrohr 2 an seinem Außenumfang mit Wellungen 4 versehen, die jedoch nicht um seinen gesamten Außenumfang herum verlaufen. Aus der Darstellung der Figuren 3 bis 5 kann entnommen werden, daß innerhalb eines Umfangssegmentes mit einer Breite ***B*** am äußeren Wellrohr 2 keine Wellungen 4 ausgebildet sind, sondern dort nur auf der Höhe der Füße der Wellungen 4 ein zylinderabschnittförmig umlaufender, glatter Materialbereich 20 vorliegt, der zur Ausbildung eines Längsschlitzes 7 am äußeren Wellrohr 2 (vgl. Darstellung der Fig. 9) entlang der beidseits des Materialbereiches 20 ausgebildeten Längskanten 10 des Längsschlitzes 7 ausgeschnitten wird, so daß dann eine Form des äußeren Wellrohres 2 entsteht, wie sie in Fig. 9 gezeigt ist.

Alle Wellungen 4 am äußeren Wellrohr 2 verlaufen auf jeder Seite des Längsschlitzes 7 bis zu dessen Längskanten 10, wobei jede Wellung 4 in jeder Längskante 10 einen Endquerschnitt 13 ausbildet.

Das im Inneren des äußeren Wellrohres 2 angeordnete innere Wellrohr 3 ist in Fig. 6 in Perspektivansicht, in Fig. 7 in Draufsicht auf die Darstellung der Fig. 6 und in Fig. 8 in einer Vorderansicht zur Fig. 7 gezeigt, wobei bei den Darstellungen der Figuren 6 bis 8 das innere Wellrohr 3 noch nicht mit einem Längsschlitz versehen ist.

Fig. 10 zeigt dann, in perspektivischer Darstellung, die Ausbildung des inneren Wellrohres 3 einschließlich des an diesem angebrachten Längsschlitzes 8.

Das innere Wellrohr 3 ist, wie die Figuren 6 bis 8 und 10 zeigen, an seinem Außenumfang mit umlaufenden Wellungen 5 einer gleichen Teilung wie die Wellungen 4 am äußeren Wellrohr 2 versehen, die, ebenso wie die Wellungen 4 am äußeren Wellrohr 2, nicht vollständig umlaufen: Innerhalb eines Umfangssegmentes einer Breite ***B***, die der Breite des Längsschlitzes 7 des äußeren Wellrohres 2 entspricht, sind keine Wellungen 5 mehr am Außenumfang des inneren Wellrohres 3 angebracht. Dort wird vielmehr, wie aus der Darstellung insbesondere der Fig. 8 gut ersichtlich ist, eine radial nach außen ragende Längsleiste 9 vorgesehen, die an ihrer radialen Außenseite ebenfalls mit Wellungen 6 versehen ist, die in ihrer Form und Teilung den Wellungen 4 am Außenumfang des äußeren Rohres 2 entsprechen und denselben Außendurchmesser wie letztere aufweisen.

Auch die Wellungen 5 am Außenumfang des inneren Wellrohres 3, die alle an jeweils einer Längskante 12 enden, bilden dort jeweils Endquerschnitte 13' aus, während die Wellungen 6 an der Längsleiste 9 an ihren Enden in zwei diese begrenzenden Längskanten 12 liegen und dort jeweils Endquerschnitte 13" ausbilden.

Wesentlich ist nun, daß alle Endquerschnitte 13, 13' und 13", in denen diese Wellungen in den Längskanten 10 des Längsschlitzes 7 bzw. den Längskanten 12 am inneren Wellrohr 3 bzw. den Längskanten 11 beidseits der Längsleiste 9 enden, nicht als offene, sondern als geschlossene Querschnitte ausgebildet sind. Dies kann z. B. dadurch erreicht werden, daß jeder dieser Endquerschnitte 13, 13' und 13" jeweils über eine ihn vollständig verschließende Abdeckung 14 bzw. 14' bzw. 14" (im Sinne einer dort angebrachten Endwand) verschlossen ist, wobei diese Abdeckung in aller Regel einstückig an der betreffenden Wellung 4 schon bei der Ausbildung des betreffenden Wellrohres im Corrugator angebracht wird.

Wie die Figuren 6, 8 und 10 zeigen, ist die Längsleiste 9 beidseits an ihren Seitenkanten 11 jeweils über eine Vertiefung 16 mit der zugeordneten Längskante 12 der Wellungen 5 verbunden, wobei, wie dies Fig. 8 deutlich zeigt, diese V-förmige Vertiefung 16 vom Außenumfang der Wellungen 6 an der Längsleiste 9 radial bis zum Innendurchmesser der Wellungen 5 des inneren Wellrohres 3 verläuft.

Die Endquerschnitte 13 an den Längskanten 10 des äußeren Wellrohres 2 ragen, wie dies aus den Fig. 3 und 5 entnehmbar ist, in radialer Richtung bis zum Innenumfang der Wellungen 4 hinab, wobei auch eine geringfügige Winkelabweichung von einer radialen Ausrichtung, etwa in einer Größenordnung von 1° bis 3°, möglich ist (im Folgenden wird dies der Kürze halber aber stets nur als "radiale" Ausrichtung angesprochen).

Wenn der Längsschlitz 7 am äußeren Wellrohr 2 ausgeschnitten ist, so daß sich dessen Ausbildung wie in Fig. 9 gezeigt darstellt, bedeutet dies, daß die Enden der Wellungen 4 in den Längskanten 10 in Form radial verlaufender Abdeckungen 14 ausgeführt sind und dort radial nach innen ragen.

Im zusammengebauten Zustand der Wellrohranordnung 1, wie er in den Figuren 1 und 2 dargestellt ist, ragen diese senkrecht nach innen verlaufenden Abdeckungen 14 der Endquerschnitte 13 in die V-förmigen Vertiefungen 16 am inneren Wellrohr 3 hinein, wie dies an der Vorderansicht aus Fig. 2 erkennbar ist.

Das innere Wellrohr 3 wird an seinem Umfang an einer Stelle, die der Längsleiste 9 diametral gegenüberliegt (wie dies in Fig. 2 oder auch Fig. 10 gezeigt ist), ebenfalls mit einem Längsschlitz 8 versehen, der jedoch, anders als der Längsschlitz 7 am äußeren Wellrohr 2, nur eine sehr geringe Breite aufweist und dabei auch nur in Längsrichtung entlang einer Schlitzebene aufgeschlitzt ist. Dies kann so ausgeführt sein, daß sich im ineinander gebauten Zustand der Wellrohranordnung 1 die Seitenflächen des Längsschlitzes 8 des inneren Wellrohres 3 berühren oder so nebeneinander liegen, daß sie sich gerade nicht berühren. Auch eine größere Dicke des Längsschlitzes 8 könnte vorgesehen werden.

Wie die Figuren 1, 2 oder auch 10 zeigen, ragt im zusammengebauten Zustand der Wellrohranordnung 1 die Längsleiste 9, die an dem inneren Wellrohr 3 ausgebildet ist, in den Längsschlitz 7 des äußeren Wellrohres 2 so hinein, daß die Wellungen 6 an der Längsleiste 9 in diesem Bereich sich als eine Art Fortsetzungen der Wellungen 4 am äußeren Wellrohr 2 darstellen. Allerdings ist beim Umlauf der Wellungen 4 und 6 an den Stellen, an denen die Vertiefungen 16 angebracht sind, also im Bereich zwischen den Längskanten 10 am äußeren Wellrohr 2 und den Längskanten 11 beidseits der Längsleiste 9, jeweils ein kleiner Zwischenspalt vorhanden.

Da allerdings alle Endflächen 13, 13' und 13" der Wellungen 4, 5 und 6 an den Endkanten 10, 11 und 12 verschlossen ausgebildet sind, kann Staub oder Schmutz aus der Umgebung zwar in die V-förmigen Vertiefungen 16 eindringen, nicht aber in das Innere der Wellungen 4, 5 und 6. Weil die V-förmigen Vertiefungen 16 im Querschnitt aber mit durchgängiger Wand ausgebildet sind und keine in das Innere der Wellungen 4, 5 und 6 hin offenen Abschnitte aufweisen, ist die Wellrohranordnung 1 gegen ein Eindringen von Staub, Schmutz o. ä. von außen in ihr Inneres hinein vollständig dicht. Hieran ändert sich auch nichts, wenn die Wellrohranordnung 1 in einem gekrümmten Zustand eingebaut wird, da alle offenen Endquerschnitte der Wellungen 4, 5 und 6 verschlossen ausgebildet sind.

Die Perspektivdarstellung der Fig. 11 zeigt nun eine alternative Ausführungsform eines inneren Wellrohres 3 im Vergleich zu der nach Fig. 6:
Der Unterschied beider Ausführungsform besteht darin, daß bei der Ausführungsform nach Fig. 11, wie dies am besten aus der Vorderansicht der Fig. 13 entnommen werden kann, die Endquerschnitte der Wellungen 6 beidseits der Längsleiste 9 entlang der dort jeweils gegebenen Längskante 10 eine radiale Ausrichtung aufweisen, während die von der Längskante 9 abgewandte Seite der V-förmigen Vertiefung 16 unter einem Winkel zur radialen Richtung verläuft. Demgegenüber ist dies bei der Ausgestaltung der V-förmigen Vertiefung 16 beim Beispiel der Figuren 6 bis 8 und 10 insoweit anders, als dort bei der V-förmigen Vertiefung 16 deren auf Seite der Längsleiste 9 liegenden Seitenfläche unter einem Winkel zur radialen Ausrichtung verläuft, während die von der Längsleiste 9 abgewandte Seite der V-förmigen Vertiefung 16 radial ausgerichtet ist.

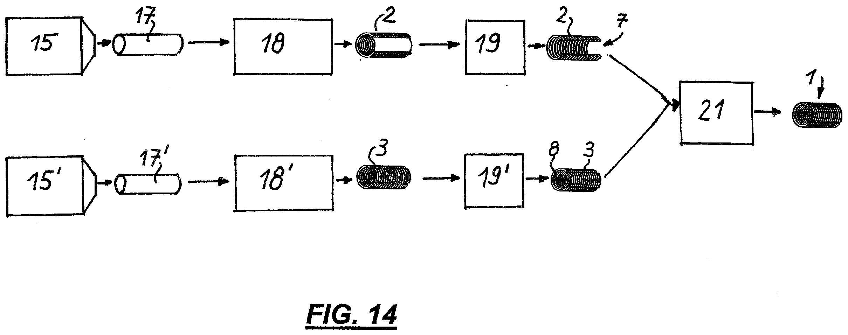

In Fig. 14 ist eine prinzipielle Darstellung der Schritte bei der Herstellung einer erfindungsgemäßen Wellschlauchanordnung 1 gezeigt:
Aus einem Extruder 15 wird ein Kunststoffrohr 17 extrudiert, das zur Formgebung einem anschließenden Corrugator 18 zugeführt wird. In diesem erfolgt die Formgebung des Kunststoffrohres 17 zu einem äußeren Wellrohr 2 in der Form, wie dieses in den Fig. 3 bis 5 gezeigt ist, also noch ohne Anbringung eines Längsschlitzes 7.

Dieses Wellrohr 2 wird sodann durch eine Schlitzvorrichtung 19 geleitet, in welcher der Längsschlitz 7 angebracht wird, so daß das die Schlitzvorrichtung 19 verlassende Teil der fertigen Form des äußeren Wellrohres 2, wie sie in Fig. 9 gezeigt ist, entspricht.

Parallel zu dieser Herstellung des äußeren Wellrohres 2 wird aus einem zweiten Extruder 15' ein anderes Kunststoffrohr 17' extrudiert, das in einem nachgeschalteten Corrugator 18' eine Formgebung erhält, die der Form des inneren Wellrohres 3 entspricht, wie sie in den Figuren 6 bis 8 dargestellt ist. Dieses innere Wellrohr 3 wird sodann durch eine Schlitzeinrichtung 19' hindurchgeführt, in welcher ein dünner Längsschlitz 8, diametral der Längsleiste 9 gegenüberliegend, am inneren Wellrohr 3 ausgebildet wird.

Anschließend wird jeweils ein erzeugtes äußeres Wellrohr 2 (mit Längsschlitz 7) mit einem erzeugten inneren Wellrohr 3 (mit Längsschlitz 8) gemeinsam einer Zusammenführeinrichtung 21 zugeleitet und in dieser das innere Wellrohr 3 durch den Längsschlitz 7 des äußeren Wellrohres 2 in dieses eingeführt, so daß eine fertige Wellrohranordnung 1 aus der Zusammenführeinrichtung 21 abgegeben wird.

Was die Ausgestaltung des äußeren Wellrohres 2 und des inneren Wellrohres 3 betrifft, so ist darauf hinzuweisen, daß die Wellungen 4, 5 und 6 an beiden jeweils mit zueinander gleicher Teilung ausgeführt sind, so daß beim Zusammenbau die Wellungen 5 des inneren Wellrohres 3 auf der radialen Innenseite in die Wellungen 4 des äußeren Wellrohres 2 eingreifen können. Dabei muß die Form der Wellungen nicht völlig gleich sein: Sie können unterschiedlich ausgeführt sein, aber die Unterschiedlichkeit darf nicht so stark sein, daß bei einer Rohrbiegung (beim Einbau der Wellrohranordnung) die Wellungen 5 des Innenrohres außer Eingriff mit den Wellungen 4 des Außenrohres treten.

Was nun die Wellungen 6 an der Längsleiste 9 des Innenrohres 3 betrifft, so sollen diese nicht nur die gleiche Teilung, sondern auch die gleiche Form wie die Wellungen 4 am äußeren Wellrohr 2 aufweisen, so daß auf der Außenseite der Wellrohranordnung 1 in Umlaufrichtung gleiche Wellungen 4 und 6 vorliegen.

Die Wellungen selbst können ringförmig umlaufend oder auch wendelförmig angebracht sein.

Üblicherweise wird das erfindungsgemäße Wellrohr 1 nach einem Herstellungsverfahren, wie es in Fig. 14 skizziert ist, hergestellt, d. h. das äußere Wellrohr 2 und das innere Wellrohr 3 werden zusammengebaut und in diesem zusammengebauten Zustand an den Kunden ausgeliefert. Die Beschickung der Wellrohranordnung 1 mit Kabeln oder einem Kabelstrang o. ä. erfolgt erst beim Kunden, der bei einer gelieferten Wellrohranordnung 1 das äußere Wellrohr 2 und das innere Wellrohr 3 wieder trennt, dann in das innere Wellrohr den gewünschten Kabelstrang o. ä. einführt und anschließend das damit versehene innere Wellrohr 3 wieder in das äußere Wellrohr 2 einsetzt.

Bei den Darstellungen in den Figuren wurde auf die Angabe von in die Wellrohranordnung 1 eingebrachten Leitungen bzw. Kabelsträngen o. ä. verzichtet, da deren Einbringen in die Wellrohranordnung nicht Gegenstand der Erfindung ist.

Die erfindungsgemäße Wellrohranordnung 1 verhindert zuverlässig das unerwünschte Eindringen von Staub, Schmutz o. ä. selbst bei sehr staub- oder schmutzhaltigen Einsatzbedingungen, weil sie ein umseitig geschlossenes System ausbildet, das eine so gut wie hermetische Abdichtung des Innenraums der Wellrohranordnung gegenüber deren Außenseite gewährleistet.

## Patentansprüche

1. Wellrohranordnung (1) zur Aufnahme von Leitungen, Kabelbäumen oder dgl., umfassend ein inneres (3) und ein äußeres (2), jeweils flexibles Wellrohr aus Kunststoff mit umlaufenden Wellungen (5, 4) und mit jeweils einem Längsschlitz (8, 7), wobei das äußere Wellrohr (2) auf das innere Wellrohr (3) unter gegenseitigem radialen Eingriff der Wellungen (4, 5) beider Wellrohre (2, 3) aufsteckbar ist, im aufgesteckten Zustand in den Längsschlitz (7) des äußeren Wellrohres (2) eine am inneren Wellrohr (3) ausgebildete Längsleiste (9) radial hineinragt und diesen überdeckt, die mit Wellungen (6) gleicher Form und Teilung wie die am äußeren Wellrohr (2) versehen ist und deren Außendurchmesser dem der Wellungen (4) am äußeren Wellrohr (2) entspricht, ***dadurch gekennzeichnet*, daß** die radialen Endquerschnitte (13, 13', 13") aller Wellungen (4, 5, 6) an beiden Seitenkanten (10, 11) sowohl des Längsschlitzes (7) des äußeren Wellrohres (2) wie auch der Längsleiste (9) am inneren Wellrohr (3) und an den beidseits dieser Längsleiste (9) verlaufenden Längsseiten (12) des restlichen Querschnitts des inneren Wellrohres (3) verschlossen sind, die Längsleiste (9) des inneren Wellrohres (3) an beiden Längsseiten (11) jeweils über eine im radialen Querschnitt V-förmige, radial bis zum Innendurchmesser der Wellungen (5) des inneren Wellrohres (3) verlaufende Vertiefung (16) mit dem restlichen Querschnitt des inneren Wellrohres (3) verbunden ist, und daß im zusammengesteckten Zustand beider Wellrohre (2, 3) jede Seitenkante (10) des Längsschlitzes (7) des äußeren Wellrohres (2) in die V-förmige Vertiefung (16) an der zugewandten Längsseite (11) der Längsleiste (9) des inneren Wellrohres (3) hineinragt.

2. Wellrohranordnung nach Anspruch 1, **dadurch gekennzeichnet, daß** die Endquerschnitte (13, 13', 13") der Wellungen (4, 5, 6) durch einstückig mit diesen ausgebildeten Abdeckungen (14, 14', 14") verschlossen sind.

3. Wellrohranordnung nach Anspruch 1 oder 2, **dadurch gekennzeichnet, daß** die Wellungen (4, 5, 6) an beiden Wellrohren (2, 3) ringförmig umlaufend oder wendelförmig angebracht sind.

4. Wellrohranordnung nach einem der Ansprüche 1 bis 3, **dadurch gekennzeichnet, daß** im Querschnitt die der Längsleiste (9) abgewandte Seitenwand jeder V-förmigen Vertiefung (16) radial ausgerichtet ist.

5. Wellrohranordnung nach einem der Ansprüche 1 bis 3, **dadurch gekennzeichnet, daß** im Querschnitt die mit der Längsleiste (9) verbundene Seitenwand jeder V-förmigen Vertiefung (16) radial ausgerichtet ist.

6. Wellrohranordnung nach einem der Ansprüche 1 bis 4, **dadurch gekennzeichnet, daß** die Wandstärken von innerem und äußerem Wellrohr (2, 3) gleich groß sind.

7. Wellrohranordnung nach einem der Ansprüche 1 bis 6, **dadurch gekennzeichnet, daß** im unbelasteten Zustand beider Wellrohre (2, 3) der Längsschlitz (7) des äußeren Wellrohres (2) eine größere Breite als der Längsschlitz (8) des inneren Wellrohres (3) aufweist.

8. Wellrohranordnung nach einem der Ansprüche 1 bis 7, **dadurch gekennzeichnet, daß** die verschlossenen Endquerschnitte (13) der Wellungen (4) des äußeren Wellrohres (2) in den Seitenkanten dessen Längsschlitzes (7) liegen.

9. Wellrohranordnung nach einem der Ansprüche 1 bis 8, **dadurch gekennzeichnet, daß** die verschlossenen Endquerschnitte (13") der Wellungen (6) des inneren Wellrohres (3) an jeder Längsseite (11) dessen Längsleiste (9) und die (13') an jeder Längsseite des restlichen Querschnitts des inneren Wellrohres (3) jeweils in der Ebene einer der beiden Seitenwände der zugeordneten V-förmigen Vertiefung (16) liegen.

10. Verfahren zur Herstellung einer Wellrohranordnung (1) nach einem der Ansprüche 1 bis 7, bei dem folgende Verfahrensschritte durchgeführt werden:
a) aus einem Extruder (15) wird ein erstes Kunststoffrohr (17) extrudiert und in einem nachgeschalteten Corrugator (18) wird unter Ausbildung von umlaufenden Wellungen (4) an seinem Umfang ein äußeres Wellrohr (2) für die Wellrohranordnung (1) ausgebildet, bei dem innerhalb eines Umfangssegmentes einer vorgegebenen Breite (B) keine Wellungen vorgesehen werden und alle radialen Endquerschnitte (13) der Wellungen (4) an den Längsseiten (10) beidseits des Umfangssegmentes verschlossen sind;
b) aus einem Extruder (15') wird ein zweites Kunststoffrohr (17') extrudiert und in einem nachgeschalteten Corrugator (18') wird unter Ausbildung von umlaufenden Wellungen (5) gleicher Teilung wie am äußeren Wellrohr (2) an seinem Umfang ein inneres Wellrohr (3) für die Wellrohranordnung (1) ausgebildet, an dem innerhalb eines Umfangssegmentes einer Breite (B), die der des Umfangssegmentes am äußeren Wellrohr (2) entspricht, radial nach außen versetzt eine Längsleiste (9) vorgesehen wird, die an jeder ihrer beiden Seitenkanten (11) über eine V-förmige Vertiefung (16), die sich radial bis zum Innendurchmesser der Wellungen (5) dieses inneren Wellrohres (3) erstreckt, mit dem restlichen Querschnitt dieses Wellrohres (3) verbunden ist, wobei die radialen Endquerschnitte (13") der Wellungen (6) an den beiden Längsseiten (11) der Längsleiste (9) und die Endquerschnitte (13') der Wellungen (5) beidseits der Längsleiste (9) an den Längsseiten (12) des restlichen Querschnitts des inneren Wellrohres (3) verschlossen sind;
c) am äußeren Wellrohr (2) wird das Umfangssegment, an dem keine Wellungen angebracht sind, herausgeschnitten und dadurch ein Längsschlitz (7) erzeugt;
d) das innere Wellrohr (3) wird ebenfalls in Längsrichtung geschlitzt;
e) schließlich wird das äußere Wellrohr (2) unter elastischer Aufweitung seines Längsschlitzes (7) auf das innere Wellrohr (3) aufgesteckt derart, daß die Längsleiste (9) des inneren Wellrohres (3) in den Längsschlitz (7) des äußeren Wellrohres (2) radial hineinragt und jede Seitenkante (10) dieses Längsschlitzes (7) in die V-förmige Vertiefung (16) an der zugewandten Längsseite (11) des inneren Wellrohres (3) eingreift.

11. Verfahren nach Anspruch 10, bei dem die Extrusion der beiden Kunststoffrohre (17, 17') parallel zueinander aus jeweils einem eigenen Extruder (15, 15') durchgeführt wird.

12. Verfahren nach Anspruch 10 oder 11, bei dem das Schlitzen des inneren Wellrohres (3) in dessen Längsrichtung nur entlang einer geradlinigen Schnittebene vorgenommen wird.

13. Verfahren nach einem der Ansprüche 10 bis 12, bei dem die Wellungen (4, 5, 6) am äußeren Wellrohr (2) und am inneren Wellrohr (3) mit zueinander gleicher Teilung ausgeführt werden.

## Claims

1. A corrugated tube arrangement (1) for accommodating lines, cable harnesses or the like, comprising an inner corrugated tube (3) and an outer corrugated tube (2), which are each flexible and made of plastic with circumferential corrugations (5, 4) and which each include a longitudinal slot (8, 7), wherein the outer corrugated tube (2) can be plugged onto the inner corrugated tube (3) with mutual radial engagement of the corrugations (4, 5) of the two corrugated tubes (2, 3), wherein in the plugged-together state, a longitudinal strip (9) formed on the inner corrugated tube (3) projects radially into the longitudinal slot (7) of the outer corrugated tube (2) and covers the latter, the longitudinal strip being provided with corrugations (6) of the same shape and pitch as those on the outer corrugated tube (2) and an external diameter of which corresponds to that of the corrugations (4) on the outer corrugated tube (2), **characterized in that** the radial end cross sections (13, 13', 13") of all the corrugations (4, 5, 6) on both side edges (10, 11) of both the longitudinal slot (7) of the outer corrugated tube (2) and of the longitudinal strip (9) on the inner corrugated tube (3) and on the longitudinal sides (12), running on both sides of this longitudinal strip (9) of the remaining cross section of the inner corrugated tube (3) are closed, the longitudinal strip (9) of the inner corrugated tube (3) is connected on both longitudinal sides (11) in each case via a recess (16) which is V-shaped and radially extends to the internal cross section of the corrugations (5) of the inner corrugated tube (3) to the remaining cross section of the inner corrugated tube (3), and **in that**, in the plugged-together state of the two corrugated tubes (2, 3), each side edge (10) of the longitudinal slot (7) of the outer corrugated tube (2) projects into the V-shaped recess (16) on the facing longitudinal side (11) of the longitudinal strip (9) of the inner corrugated tube (3).

2. The corrugated tube arrangement according to claim 1, **characterized in that** the end cross sections (13, 13', 13") of the corrugations (4, 5, 6) are closed by covers (14, 14', 14") formed integrally therewith.

3. The corrugated tube arrangement according to claim 1 or 2, **characterized in that** the corrugations (4, 5, 6) are attached to both corrugated tubes (2, 3) in an annular circumferential or helical manner.

4. The corrugated tube arrangement according to one of claims 1 to 3, **characterized in that**, in cross section, the side wall of each V-shaped recess (16) facing away from the longitudinal strip (9) is radially aligned.

5. The corrugated tube arrangement according to one of claims 1 to 3, **characterized in that**, in cross section, the side wall of each V-shaped recess (16) connected to the longitudinal strip (9) is radially aligned.

6. The corrugated tube arrangement according to one of claims 1 to 4, **characterized in that** the wall thicknesses of inner and outer corrugated tube (2, 3) are equal.

7. The corrugated tube arrangement according to one of the claims 1 to 6, **characterized in that**, in an unloaded state of both corrugated tubes (2, 3), the longitudinal slot (7) of the outer corrugated tube (2) has a greater width than the longitudinal slot (8) of the inner corrugated tube (3).

8. The corrugated tube arrangement according to one of the claims 1 to 7, **characterized in that** the closed end cross sections (13) of the corrugations (4) of the outer corrugated tube (2) lie in the side edges of its longitudinal slot (7).

9. The corrugated tube arrangement according to one of claims 1 to 8, **characterized in that** the closed end cross sections (13") of the corrugations (6) of the inner corrugated tube (3) lie on each longitudinal side (11) of its longitudinal slit (9) and those (13') on each longitudinal side of the remaining cross section of the inner corrugated tube (3) each lie in the plane of one of the two side walls of the associated V-shaped recess (16).

10. A method for producing a corrugated tube arrangement (1) according to one of claims 1 to 7, in which the following method steps are performed:
a) a first plastic tube (17) is extruded from an extruder (15) and in a downstream corrugator (18), an outer corrugated tube (2) for the corrugated tube arrangement (1) is formed by forming circumferential corrugations (4) on its circumference, on which no corrugations are provided within a circumferential segment of a predetermined width (B) and all radial end cross sections (13) of the corrugations (4) are closed on the longitudinal sides (10) on both sides of the circumferential segment;
b) a second plastic tube (17') is extruded from an extruder (15') and in a downstream corrugator (18'), an inner corrugated tube (3) for the corrugated tube arrangement (1) is formed by forming circumferential corrugations (5) of the same pitch as on the outer corrugated tube (2) on its circumference, on which a longitudinal strip (9) is provided radially outwardly offset within a circumferential segment of a width (B) corresponding to that of the circumferential segment on the outer corrugated tube (2), which is connected at each of its two side edges (11) via a V-shaped recess (16) which extends radially as far as the inner cross section of the corrugations (5) of this inner corrugated tube (3) to the remaining cross section of this inner corrugated tube (3), the radial end cross sections (13") of the corrugations (6) being closed on the two longitudinal sides (11) of the longitudinal strip (9) and the end cross sections (13') of the corrugations (5) being closed on both sides of the longitudinal strip (9) on the longitudinal sides (12) of the remaining cross section of the inner corrugated tube (3);
c) on the outer corrugated tube (2), the circumferential segment to which no corrugations are attached is cut out, thereby creating a longitudinal slit (7);
d) the inner corrugated tube (3) is also slit longitudinally;
e) finally, the outer corrugated tube (2) is slipped onto the inner corrugated tube (3) with elastic expansion of its longitudinal slot (7) in such a way that the longitudinal strip (9) of the inner corrugated tube (3) projects radially into the longitudinal slot (7) of the outer corrugated tube (2) and each side edge (10) of this longitudinal slot (7) engages in the V-shaped depression (16) on the facing longitudinal side (11) of the inner corrugated tube (3).

11. The method according to claim 10, in which the extrusion of the two plastic tubes (17, 17') is carried out parallel to each other from a separate extruder (15, 15') in each case.

12. The method according to claim 10 or 11, wherein the slitting of the inner corrugated tube (3) in its longitudinal direction is performed only along a rectilinear cutting plane.

13. The method according to any one of claims 10 to 12, in which the corrugations (4, 5, 6) on the outer corrugated tube (2) and on the inner corrugated tube (3) are formed with the same pitch relative to one another.

## Revendications

1. Agencement de tube annelé (1) pour la réception de fils électriques, faisceaux de câbles ou similaires comprenant un tube annelé intérieur (3) et un tube annelé extérieur (2) chacun étant flexible, en matière plastique avec des annelures périphériques (5, 4) et chacun ayant une fente longitudinale (8, 7), le tube annelé extérieur (2) pouvant être assemblé sur le tube annelé intérieur (3) par interpénétration radiale des annelures (4, 5) des deux tubes annelés (2, 3), à l'état assemblé, une bande longitudinale (9) formée sur le tube annelé intérieur (3) faisant saillie radialement dans la fente longitudinale (7) du tube annelé extérieur (2) et recouvrant cette dernière, laquelle bande longitudinale est pourvue d'annelures (6) de forme et de pas similaires à ceux du tube annelé extérieur (2) et dont le diamètre extérieur correspond à celui des annelures (4) du tube annelé extérieur (2), **caractérisé en ce que** les sections transversales d'extrémité radiales (13, 13', 13") de toutes les annelures (4, 5, 6) sur les deux arêtes latérales (10, 11) tant de la fente longitudinale (7) du tube annelé extérieur (2) que de la bande longitudinale (9) du tube annelé intérieur (3) et des côtés longitudinaux (12) de la section transversale restante du tube annelé intérieur (3) s'étendant des deux côtés de cette bande longitudinale (9) sont fermées, la bande longitudinale (9) du tube annelé intérieur (3) est reliée à la section transversale restante du tube annelé intérieur (3) sur les deux côtés longitudinaux (11) à chaque fois au moyen d'un creux (16) en forme de V en section transversale radiale qui s'étend radialement jusqu'au diamètre intérieur des annelures (5) du tube annelé intérieur (3), et **en ce que**, à l'état assemblé des deux tubes annelés (2, 3), chaque arête latérale (10) de la fente longitudinale (7) du tube annelé extérieur (2) fait saillie dans le creux en forme de V (16) sur le côté longitudinal (11) faisant face de la bande longitudinale (9) du tube annelé intérieur (3).

2. Agencement de tube annelé selon la revendication 1, **caractérisé en ce que** les sections transversales d'extrémité (13, 13', 13") des annelures (4, 5, 6) sont fermées par des recouvrements (14, 14', 14") formés d'un seul tenant avec ces annelures.

3. Agencement de tube annelé selon la revendication 1 ou 2, **caractérisé en ce que** les annelures (4, 5, 6) sont réalisées sur les deux tubes annelés (2, 3) de manière circulaire ou en spirale.

4. Agencement de tube annelé selon l'une des revendications 1 à 3, **caractérisé en ce que**, en section transversale, la paroi latérale de chaque creux en forme de V (16) opposée à la bande longitudinale (9) est disposée radialement.

5. Agencement de tube annelé selon l'une des revendications 1 à 3, **caractérisé en ce que**, en section transversale, la paroi latérale de chaque creux en forme de V (16) reliée à la bande longitudinale (9) est disposée radialement.

6. Agencement de tube annelé selon l'une des revendications 1 à 4, **caractérisé en ce que** les épaisseurs de paroi des tubes annelés intérieur et extérieur (2, 3) sont similaires.

7. Agencement de tube annelé selon l'une des revendications 1 à 6, **caractérisé en ce que** à l'état non chargé des deux tubes annelés (2, 3), la fente longitudinale (7) du tube annelé extérieur (2) présente une largeur supérieure à celle de la fente longitudinale (8) du tube intérieur (3).

8. Agencement de tube annelé selon l'une des revendications 1 à 7, **caractérisé en ce que** les sections transversales d'extrémité fermées (13) des annelures (14) du tube annelé extérieur (2) se trouvent dans les arêtes latérales de cette fente longitudinale (7).

9. Agencement de tube annelé selon l'une des revendications 1 à 8, **caractérisé en ce que** les sections transversales d'extrémité fermées (13") des annelures (6) du tube annelé intérieur (3) se trouvent sur chaque côté longitudinal (11) de cette bande longitudinale (9) et les sections transversales d'extrémité (13') se trouvent de chaque côté longitudinal de la section transversale restant du tube annelé intérieur (3) à chaque fois dans le plan de l'une des parois latérales du creux en forme de V (16) associé.

10. Procédé de fabrication d'un agencement de tube annelé (1) selon l'une des revendications 1 à 7, au cours duquel les étapes de procédé suivantes sont exécutées :
a) un premier tube en matière plastique (17) est extrudé à partir d'une extrudeuse (15) et dans une machine à anneler (18) disposée en série, pendant la formation d'annelures périphériques (4), sur sa périphérie est formé pour l'agencement de tube annelé (1) un tube annelé extérieur (2) sur lequel aucune annelure n'est prévue à l'intérieur d'un segment périphérique d'une largeur prédéterminée (B) et toutes les sections transversales d'extrémité radiales (13) des annelures (4) sont fermées sur les côtés longitudinaux (10) des deux côtés du segment périphérique ;
b) un deuxième tube en matière plastique (17') est extrudé à partir d'une extrudeuse (15') et dans une machine à anneler (18') disposée en série, pendant la formation d'annelures périphériques (5) de pas similaire à celui des annelures du tube annelé extérieur (2), sur sa périphérie est formé, pour l'agencement de tube annelé (1), un tube annelé intérieur (3) dans lequel, à l'intérieur d'un segment périphérique d'une largeur (B) qui correspond à celle du segment périphérique du tube annelé extérieur (2), est prévue une bande longitudinale (9) décalée radialement vers l'extérieur et qui, sur chacune de ses arêtes latérales (11) au-dessus d'un creux en forme de V (16) s'étendant radialement jusqu'au diamètre interne des annelures (5) de ce tube annelé interne (3), est reliée avec la section transversale restante de ce tube annelé (3), les sections transversales d'extrémité radiales (13") des annelures (6) étant fermées des deux côtés longitudinaux (11) de la bande longitudinale (9) et les sections transversales d'extrémité (13") des annelures (5) étant fermées des deux côtés de la bande longitudinale (9) sur les côtés longitudinaux (12) de la section transversale restante du tube annelé intérieur (3) ;
c) le segment périphérique, sur lequel aucune annelure n'est réalisée, est découpé sur le tube annelé extérieur (2) et produit ainsi une fente longitudinale (7) ;
d) le tube annelé intérieur (3) est fendu également dans la direction longitudinale ;
e) ensuite le tube annelé extérieur (2) est assemblé sur le tube annelé intérieur (3) en élargissant élastiquement sa fente longitudinale (7), de telle sorte que la bande longitudinale (9) du tube annelé intérieur (3) fasse saillie radialement dans la fente longitudinale (7) du tube annelé extérieur (2) et que chaque arête latérale (10) de cette fente longitudinale (7) pénètre dans le creux en forme de V (16) sur le côté longitudinal (11) du tube annelé intérieur (3) faisant face.

11. Procédé selon la revendication 10, dans lequel l'extrusion des deux tubes en matière plastique (17, 17') est effectuée parallèlement l'un à l'autre à partir des extrudeuses (15, 15') respectives.

12. Procédé selon la revendication 10 ou 11, dans lequel la réalisation de la fente du tube annelé intérieur (3) est réalisée dans sa direction longitudinale seulement le long d'un plan de coupe rectiligne.

13. Procédé selon l'une des revendications 10 à 12, dans lequel les annelures (4, 5, 6) sont effectuées sur le tube annelé extérieur (2) et sur le tube annelé intérieur (3) avec des pas similaires pour les deux tubes.
